# EUROPEAN PATENT APPLICATION

(11) **EP 3 081 434 A1**
(43) Date of publication of application: **19.10.2016**
(21) Application number: 15163755.0
(22) Date of filing: 15.04.2015
(51) Int. Cl.: B60R 13/08, B29C 65/08, B29C 65/00

(54) **ENGINE COVER ARRANGEMENT**

(71) Applicant: Autoneum Management AG, 8406 Winterthur (CH)
(72) Inventor: Müller, Christian, 8400 Winterthur (CH)

(57) **Abstract**

The present invention is directed to a cover arrangement for reducing the noise emitted by a motor vehicle part, in particular of the engine of a motor vehicle, comprising a cover having at least a fibrous carrier layer, and the cover arrangement comprising at least one mounting part for mounting the cover to the vehicle, the mounting part having at least one base portion made from a thermoplast, characterized in that the at least one mounting part is mounted to the cover by at least one welding connection of the at least one base portion and at least one fibrous carrier layer.

## Description

### Technical Field

The present invention is directed to a cover arrangement for screening the noise emitted by a motor vehicle part and method for producing the cover arrangement.

### Background

A cover arrangement comprises a cover for screening the noise emitted by a motor vehicle part. As a typical example, an engine top cover is used for partly or completely covering the engine of a motor vehicle from above.

Reduction of the noise, which is emitted by the motor engine, is an important function of the cover. When an engine top cover is mounted onto the engine of a vehicle, the mounting connectors, which mechanically connect the engine top cover to the engine bay, will couple any vibrations of the engine to the engine top cover. Thereby, noise is transferred to the engine top cover and vibrations of the engine top cover would act as an additional source of noise. Moreover, the mechanical stress caused by the vibrations would continuously degrade the quality of the engine top cover and the connectors. Therefore, elastomer decoupling parts of the connectors are used in the prior art for dampening the transfer of vibrations from the engine to the engine top cover. However, such elastomer decoupling parts increase the weight and the costs of such a cover arrangements. In the prior art, the connectors are often provided in two parts, which allows the connector being clipped between the two parts, which use an opening of the cover to make contact. Using two-part-connectors is also a relatively costly solution. Such drawbacks are undesired by the car industry, where a general need for light-weight products and cost-saving productions exists.

The object underlying the present invention is to provide a light-weight cover arrangement for screening the noise emitted by a motor vehicle part and a method for cost efficiently producing the cover arrangement.

### Summary of the invention

The problem is solved by the cover arrangement according to claim 1 and the method of claim 13 and the device according to claim 16.

The cover arrangement according to the invention for screening the noise emitted by a motor vehicle part, in particular of the engine of a motor vehicle, comprising a cover having at least a fibrous carrier layer and the cover arrangement comprising at least one mounting part for mounting the cover to the vehicle, the mounting part having at least one base portion made from a thermoplast, wherein the at least one mounting part is mounted to the cover by at least one welding connection of the at least one base portion and at least one fibrous carrier layer.

Furthermore by a cover arrangement according to the invention wherein at least a part of the base portion contact the outer surface of the fibrous carrier layer and or penetrates the fibrous carrier layer at least in part, and, in particular, the welding connection is localized within said fibrous carrier layer at least in part.

Preferably by a cover arrangement, wherein at least a part of the base portion contact the outer surface of the fibrous carrier layer and or penetrates the fibrous carrier layer at least in part and extending into the at least one fibrous carrier layer, wherein the thermoplast material of the base portion is substantially hollow-cylindrical shaped and having a diameter of substantially 1.0 mm to 5.0 mm.

It was found by the inventors that the welding connection of the thermoplast of the base portion with the fibres of the fibrous carrier layer provides a stable mechanical connection of the cover with the mounting part(s). The base portion can in particular be anchored at, or in, the fibrous carrier layer of the cover such that sound-caused vibrations of the base part are transferred to the fibrous carrier layer. The structure born energy, created by the engine vibrations, is dissipated through the thermoplastic based fixation, connection into the fibrous carrier layer and emitted by the sound emitting carrier through the cover. Thereby decreasing the noise without the necessity of a decoupler insert in the mounting system. The welding connection according to the invention further enhances this process of dissipation into the fibrous carrier layer.

The term "thermoplast", presently, does not include elastomers, which in particular also are commercially available with thermoplastic properties within a limited temperature range. The thermoplasts provided for the present invention do have a lower density and/or lower purchase price than a conventional elastomer; therefore a cost saving light-weight construction can be achieved. This means, that the first polymer material, and preferably also the second polymer material, is a non-elastomer and is substantially non-elastomeric, in particular compared to an elastomer like natural rubber; with other words: thermoplasts excluding thermoplastic elastomers.

According to a preferred solution according to the invention, an elastomeric decoupler arranged between the cover and the mounting part can be omitted. In other words, preferably, the cover does not have an elastomeric decoupler arranged between the cover and the mounting part, the elastomeric decoupler being made from an elastomer.

A fibrous carrier layer or multiple fibrous layers forming together a fibrous carrier layer of the cover is. Carrier layer is meant in particular, that the major fraction of the stiffness of the cover is contributed by the one fibrous layer or multiple fibrous layers, in particular. Acting as a carrier layer, the one or more fibrous layer of the cover has a larger stiffness than the residual layers of the layer setup of the cover, when measuring the stiffness. When the at least one fibrous layer is used as the carrier layer, i.e. carrier structure, of the cover, no further carrier structure is required. Then, the at least one fibrous layer is preferably the only carrier structure of the cover. In particular, the cover preferably has the at least one fibrous carrier layer being used as the carrier layer(s) and does not have a superposed layer or structure of a solid material, which acts as a carrier structure, e.g. a solid plastic material. Solid thick plastic layers, which have been used in the prior art, are not required. In consequence, such a cover is lightweight and stable. Moreover, any acoustic vibrations associated to solid material layers acting as a carrier layer are avoided.

The at least one fibrous carrier layer comprises at least of fibers and a thermoplastic binder or a thermoset binder, whereby the binder forms small binding points between the fibers.

The fibers are at least one of thermoplastic fibers, for instance polyester fibers, like polyethylene-terephthalate, natural fibers, like flax or cotton or mineral fibers, like glass fibers, ceramic fibers, carbon or basalt fibers or a combination of those fibers. It can also be a mixture of such fibers, for instance a mixture of polyester and glass fibers. The fibers can be staple fibers or endless filaments.

As a thermoplastic binder either a copolymer of polyester, or polyamide, preferably polyamide 6 or polyamide 66 can be used. Preferably the binder is in the form of fibres, flakes or powder, whereby fibers are best to obtain a more homogenous mixture with the other fibers.

Alternatively the binder is a thermoset binder, for instance a resinous type like phenolic resin.

The area weight of the fibrous carrier layer is preferably between 200 and 1700 g/m², preferably between 400 and 1500 g/m².

The fibrous carrier layer fulfils latest flammability requirements for the engine bay. The fibrous carrier layer, in particular, also offers thermal insulation. In case of the cover being an engine top cover, the thermal insulation helps to keep the engine at an efficient operating temperature in case of an engine encapsulation.

As a result of the welding the thermoplast of the base portion is able to make a direct welding connection with the fibres of the fibrous carrier layer, which may be referred to as a material connection between the thermoplast and the fibres of the fibrous carrier layer. Such a connection is able to mechanically reliably support the cover. However, the welding connection may also be realized by letting the thermoplast melt, while the fibres do not melt, thereby letting the thermoplast enclose the fibres for establishing the mechanically stable connection. In case that the fibrous carrier layer contains a binder, the binder may also be melted in order to, e.g. additionally, realize a material connection between the thermoplast and the binder.

With materially connection is meant that the material of the carrier layer and the material of the connecting area of the mounting are bonded such that they cannot be taken apart without damaging at least one of the materials. Although an adhesive might be used, there should be at least an intimate contact between the two main materials directly.

The cover arrangement according to the invention may have at least one additional layer in the form of a light foam layer and or a film layer and or a nonwoven layer, superposed and laminated to the fibrous carrier layer on the surface where the welding connection is localised. The layers might be available in substantially the full area of the cover arrangement including the areas dedicated for the mounting connection. Preferably at least part of the base portion penetrates the additional layer or layers, contacts the outer surface of the fibrous carrier layer and or penetrates the fibrous carrier layer at least in part, and, in particular, the welding connection is localized within said fibrous carrier layer (3; 3') at least in part.

Preferably the additional layers in the area of the welding are compressed during the moulding of the part to enable a better control of the welding process; preferably a flat surface is obtained for a full contact with the base portion.

For example the cover preferably has at least one fibrous carrier layer and at least light foam layer covered by a nonwoven scrim layer, which are preferably superposed at least in an area of the cover, or which are preferably superposed in substantially the full area of the cover.

The cover can, in particular additionally, have at least one layer, which, in particular, may be penetrated and/or contacted by the base portion or which may not be penetrated and/or contacted by the base portion. A layer of the layer setup of the cover can have an individual function or may fulfil a function in addition with at least one other layer. For example, a decoration layer and/or a protection layer may be provided. The protection layer may be a non-woven scrim layer, for example, or a perforated aluminium foil for reflecting heat radiation.

A light foam layer, preferably, is a polyurethane (PU) foam layer, which is, preferably, open-celled. The density of the light foam layer, in particular the PU light foam layer, is preferably between 10 and 35 kg / m³, preferably between 12 and 20 kg / m³, which means that the foam layer is lightweight. The area weight of the light foam layer, in particular the PU light foam layer, is preferably between 140 and 400 g/m², preferably between 180 and 350 g/m². Preferably semi-rigid or flexible foam from one of polyurethane or melamine is used. Preferably the foam used further comprises at least a fire retardant.

The term semi-rigid as applied to foams is a standard term used in the art. Generally such foams have a glass transition temperature (Tg) between rigid and flexible foams. Open cell foams means that 50% or more of the cells in the foam have an open structure. Preferably for acoustic properties more than 90% of the cells have an open structure.

Preferably the open cell foam is made of polyurethane and further comprises graphite. For instance the foam as disclosed in EP1153066 and its production in EP1153067 can be used together with the invention as disclosed. Preferably the foam contains graphite preferably exfoliating, in the range of between 2 and 40% by weight of the foam.

Preferably the thermoplast of the base portion is chosen from the group of materials comprising polyamide, in particular polyamide 6.6, polyamide 6, polyesters, in particularly polyethylene terephthalate (PET) or polybutylene terephthalate (PBT) and wherein the thermoplast may or may not contain filler, e.g. a glass fiber or mineral fiber.

The term "thermoplast", presently, does not include elastomers, which in particular also are commercially available with thermoplastic properties within a limited temperature range. The thermoplasts provided for the present invention do have a lower density and/or lower purchase price than a conventional elastomer, therefore a cost saving light-weight construction can be achieved. This means, that the first polymer material, and preferably also the second polymer material, is a non-elastomer and is substantially non-elastomeric, in particular compared to an elastomer like natural rubber.

Preferably, the mounting part consists at least partly of a polymer material, the base portion comprising or consisting of a polymer material, are chosen such that the elastic modulus Eₜ, i.e. the modulus of elasticity in tension, measured preferably by ASTM D638 - 10 or more preferably ISO 527-1:2012, respectively, of the first polymer material, is chosen from the preferred ranges having a lower limit E_{t_min} and an upper limit E_{t_max}, wherein E_{t_min} is preferably chosen from the group of values 0.11; 0.15; 1.00; 1.40; 2.00 and wherein E_{t_max} is preferably chosen from the group of values 5.00; 10.00; 20.00; 50.00, each value being expressed in Gigapascal (GPa), and preferably 0.11 GPa < Eₜ < 50 GPa, or 0.15 GPa < Et < 20.00 GPa or 0.15 GPa < Et < 5.00 GPa. The elastic modulus Et typically is higher in case that the polymeric material contains a filler, e.g. reinforcement fibres. Elastomers, for example, typically have 0.001 GPa < Eₜ < 0.10 GPa.

Surprisingly the loss of acoustic dampening, which occurs due to the omission of a conventional elastomeric decoupler arranged between the top cover and the engine of the motor vehicle as a part of a conventional mounting, can be compensated by providing an acoustically self-dampening construction of the top cover. A top cover, which at least contains a fibrous structural layer, was found to provide a satisfying acoustically dampening when used in combination with the snap-in mounting directly connected to the fibrous carrier layer according to the invention. Therefore, acoustical dampening can be also easily achieved by using the cover arrangement according to the invention.

The layers of the cover can be laminated together under pressure and preferably, be thermo-compressed at a process temperature, which may be such that the major part of the material of the layers is not melted. In particular, the process temperature may be between 150 °C and 300°C, or 180°C and 250°C, as an example.

In case of an established welding connection, preferably, at least a part of the base portion penetrates the additional layer or layers like e.g. the light foam layer, the nonwoven cover layer and penetrates the fibrous carrier layer at least in part, and, in particular, the welding connection is localized within said fibrous carrier layer at least in part. The part of the base portion, or respectively, the fraction of the thermoplast, which penetrates the additional layer or layers like e.g. the light foam layer, the nonwoven cover layer, preferably breaks through this layer or these layers, e.g. when performing ultrasonic welding. This has the advantage that the material of additional layer or layers for instance the light foam layer is, at least not completely or respectively by a major fraction, not simply displaced in the region of the fibrous carrier layer, when the part of the base portion is moved through the additional layer or layers for instance the light foam layer towards the fibrous carrier layer. As a result, the thermoplast of the base portion is not covered by the material of the additional layers and is able to make a direct welding connection with the fibres of the fibrous carrier layer, which may be referred to as a material connection between the thermoplast and the fibres of the fibrous carrier layer. Such a connection is able to mechanically reliably support the cover. However, the welding connection may also be realize by letting the thermoplast melt, while the fibres do not melt, thereby letting the thermoplast enclose the fibres for establishing the mechanically stable connection. In case that the fibrous carrier layer contains a binder, the binder may also be melted in order to, e.g. additionally, realize a material connection between the thermoplast and the binder.

Preferably, the at least one welding connection is realized by ultrasonic welding. However, it is also possible to use another welding method for welding the thermoplast of the base portion to the fibres of the fibrous carrier layer, e.g. a heat sealing, e.g. using heated protrusions and pressure, contact welding, or laser welding.

The invention also relates to a device for producing the cover arrangement, preferably the cover arrangement according to the invention, wherein the at least one connection is a welding connection of the at least one base portion and the at least one fibrous layer. Such device is preferably configured to apply the method according to the invention. Such a device comprises a welding head, which is configured to establish the welding connection of the at least one base portion and the at least one fibrous layer. Preferably, the welding head has at least one substantially cylindrical protrusion, or more preferably, a substantially conical protrusion, in particular a substantially conical protrusion having a cone-shaped section. The protrusion is configured to be pressed against the at least one base portion and the at least one fibrous layer to establish the welding connection. The device can comprise or can be an ultrasonic welding machine, in particular a commercial ultrasonic welding machine.

The ultrasonic welding can be performed on an ultrasonic welding machine. The ultrasonic welding machine applies pressure to the base portion of the mounting part, which is positioned between the cover and the welding head of the ultrasonic welding machine. The ultrasonic welding machine can be a commercial device, e.g. RINCO Standard 745 available from Rinco Ultrasonics AG, Switzerland. The operating parameters for operating the ultrasonic welding machine may be determined in dependency on the embodiment of the cover arrangement, in particular depending on the configuration of the welding head and the protrusion(s) of the welding head.

The welding head, preferably, is configured to establish a welding connection of the cover arrangement according to the invention. The welding head, preferably, is configured to be used in the method according to the invention, in case of establishing the welding connection by ultrasonic welding. The welding head, preferably, has a welding head base and at least one protrusion of the welding head base. The protrusion protrudes from the welding head base and serves to transfer the ultrasonic energy from the welding head to the base portion/and or the cover. The protrusion, preferably, is a pin, which, preferably, has a cylindrical shape, in particular the end face of the pin being a plain circle, the axis of the pin being perpendicular to said circle. Preferably, there is a sharp edge between the circle and the cylindrical outer surface of the pin. Preferably, multiple protrusions are arranged at the welding head base in parallel, preferably in an array, which allows for simultaneously establishing multiple welding connections.

Preferably, the protrusion(s) of the welding head has (have) at least -or exactly- one first section, which is arranged proximal to the base part, preferably integrally formed with the base part, and preferably a second section, which is preferably arranged distal to the base part and is the section which makes first contact with the target for receiving the ultrasonic energy, e.g. the base portion of the mounting part. The second section preferably is cone-shaped, which results in an optimal energy transfer and also allows an efficient penetration of layers of the layer setup. The first section, which preferably forms the transition section of the protrusion to the base part of the welding head, preferably, also has a substantially cone-shape, which preferably has a concavely shaped wall, which means in case of a symmetrical cone that the cone side wall is dented towards the cone symmetry axis. Said shape allows for easily pulling out the welding head protrusions from the layer setup after they had penetrated a layer setup and established the welding connection.

For a predetermined cover having a predetermined setup of eventually superposed layers, at least including a fibrous carrier layer, the number and/or density (number per surface area) and arrangement of protrusions can be varied in the desired way. For example, said number can be chosen from the group of preferred ranges including 2 to 30, 5 to 25, 8 to 20, 10 to 16. The length of the protrusion, preferably, is adapted to the specific setup of layer(s) of the cover and is then depending on the concrete embodiment of the cover. The length of the protrusion has, preferably, to be configured to extend from the outer surface of the cover into the fibrous carrier layer, as a rule. In case of the protrusion being a cylindrical pin, the diameter of the pin, preferably, is between 1.0 and 2.0 mm, preferably between 1.3 and 1.7 mm, preferably is about or exactly 1.5 mm. Said diameters were found to be particularly useful in particularly for breaking through a light foam layer and penetrating the fibrous carrier layer, however the use of the same dimensions for other set ups was beneficial as well.

Preferably, the at least one welding connection is realized by pressing the ultrasonic welding head of an ultrasonic welding machine against the base portion, thereby displacing the polymer material towards the at least one fibrous carrier layer, preferably then penetrating at least one light foam layer, and then penetrating the at least fibrous carrier layer at least in part and forming the welding connection with the at least one fibrous carrier layer. The light foam layer is, preferably, penetrated by the welding head protrusion when the latter penetrates the light foam layer.

Preferably, the at least one base portion is mounted to the layer setup by multiple welding connections, wherein, in particular, the ultrasonic welding head is configured to create multiple welding connections in parallel, in particular the ultrasonic welding head having multiple protrusions for transferring the ultrasonic energy to the base portion and the layer setup.

An example of welding connection between the cover and the initially plain plate of the base portion of a mounting part, of a cover arrangement. The two layers are stacked on top of each other for the realization of the welding connection between the base portion of the mounting part and the fibers of the fibrous carrier layer. The pins of the welding head serve to transfer the ultrasonic energy from the welding head base to the target, which, primarily, is the -initially fully plain shaped- base portion having a thickness of 3 mm for instance. The mounting part is mounted to the cover by a welding connection of the base portion and at least one fibrous carrier layer, wherein the welding connection is realized by an ultrasonic welding machine having an ultrasonic welding head, in the embodiments shown here. The welding connection is realized by pressing the ultrasonic welding head of the ultrasonic welding machine against the plate portion, thereby displacing the polymer material towards the light foam layer and the at least one fibrous carrier layer, first penetrating at least one light foam layer, and then penetrating the at least fibrous carrier layer at least in part and forming the welding connection with the at least one fibrous carrier layer.

The realised welding connection between the base portion of the mounting part and the fibers of the fibrous carrier layer can then be described as follows. Some thermoplast material of the base portion was displaced by the pins of the ultrasonic welding head towards the cover, thereby creating a hollow thermoplast section of the base portion inside the layer setup of the cover. The pin length is about 4 mm for example, but can be between 2.5 mm and 8.0 mm, depending on the embodiment of the cover. Said hollow thermoplast section has a hollow inner volume and a cylindrical side wall and substantially circle-shaped top wall. The cylindrical side wall has a first section, which breaks through the light foam layer and extends into the fibrous carrier layer by a section. The thermoplast in section is welded to the glass fibers of the fibrous carrier layer, thereby creating a mechanically stable welding connection between the base portion of the mounting part and the cover. This way, the cover is carried by the mounting part being anchored into the fibrous carrier layer. The area of the fibrous carrier layer around the section of the thermoplast acts as an elastic support for carrying the cover. This way, an acoustically self-dampening system is created, where the mass of the cover acts as the mass in an acoustical mass-spring system, and the area of the fibrous carrier layer around the section of the thermoplast acts as the spring. Sound insulation occurs by reducing vibrations, which are transferred from the engine through the mounting part -via the fibrous carrier layer- to the cover.

The cover arrangement, preferably, is configured to be an engine top cover arrangement for being mounted on the engine of a motor vehicle, in particularly as an engine top cover.

Preferably, the cover is configured to be supported by the at least one mounting part, which is mounted at the vehicle, wherein the at least welding connection of the at least one base part and the at least one fibrous carrier layer provides an acoustical decoupling of the cover and the vehicle. The total area weight of the cover may be chosen from the preferred ranges of 500 and 2500 g/m², 600 and 2200 g/m², 800 and 2000 g/m², 1000 and 1800 g/m², for example.

The mounting part, preferably, is made by injection moulding using the thermoplast.

The base portion may comprise a plate portion, which, e.g., may be substantially plain and/or may have a rectangular or circular-ring shape. Said plate is made from the thermoplast, preferably, and may have a constant or varying thickness chosen from the group of preferred ranges including 1.0 mm to 10.0 mm, 2.0 mm to 6.0 mm, or preferably 2.5 to 3.5 mm. Such thicknesses are, in particular, appropriate for being used in combination with an ultrasonic welding head, for melting and displacing the thermoplast and, in particular, moving the thermoplast through additional layer for instance a light foam layer toward the fibrous carrier layer, where it establishes the welding connection with the fibres.

The thickness of the at least one light foam layer is, preferably, between 0.5 mm and 5.0 mm, and, preferably, the thickness of the fibrous carrier layer is between 0.5 mm and 5.0 mm, and, preferably, the thermoplast material of the base portion is, preferably, penetrating the at least one light foam layer and, preferably, extending into the at least one fibrous carrier layer, wherein the thermoplast material of the base portion is, preferably, substantially hollow-cylindrical shaped and, preferably, has a diameter of substantially 1.0 mm to 5.0 mm.

Scanning electron microscopy (SEM) pictures (pictures not shown), originally were taken in 40x magnification of a cross section through the cover and thermoplast base portion with a thickness of 2.5 mm on the area of connection, which is welded to the fibrous carrier layer of the cover, which has a thickness of 1.0 mm at the area of connection. From the pictures it can be clearly seen that the hollow-cylindrical part of the thermoplast base portion extends through the scrim layer and the light foam layer at least partially into the fibrous carrier layer, the welding connection being located inside the fibrous carrier layer, wherein fibrous carrier layer is not fully penetrated by the thermoplast section, and the decoration layer is not bulged or otherwise visually impaired by establishing the welding connection. The light foam layer has a thickness of 1.0 mm, for instance and the decoration layer and the scrim layer have a thickness of about 1.0 to 0.2 mm, respectively. It should be noted that some little amount of the material of the scrim layer is displaced into the light foam layer by the displaced thermoplast, and some little amount of the material of the light foam layer is displaced into the fibrous carrier layer by the displaced thermoplast, and the area of the fibrous carrier layer around the section of the thermoplast is slightly compressed by the displaced thermoplast; however, the light foam layer is destroyed by the thermoplast of the base portion and the welding connection is created in the desired way, leading to excellent acoustically dampening results.

The invention, furthermore, relates to a method for connecting at least one mounting part with a cover, the mounting part being configured for mounting the cover to a vehicle, in particular the cover being an engine top cover for covering the engine of the vehicle from above, the cover having superposed layers, including, at least, a foam layer and a fibrous carrier layer, the at least one mounting part having at least one base portion made from a thermoplast, comprising the steps:
- mounting the at least one mounting part to the cover by generating at least one welding connection of the at least one base portion and at least one fibrous carrier layer.

Preferably, the step of mounting the at least one mounting part to the cover comprises the steps of
- penetrating the light foam layer by at least a part of at least one base portion;
- at least partly penetrating the fibrous carrier layer by said part of the base portion;
- realizing the welding connection at least partly within said at least one fibrous carrier layer.

Preferably, the step of mounting the at least one mounting part to the cover comprises the steps of
- pressing the ultrasonic welding head of an ultrasonic welding machine against a base portion of a mounting part, thereby melting and displacing some thermoplast material of the base portion towards the at least one fibrous carrier layer,
- preferably: then penetrating the light foam layer by the thermoplast material using the ultrasonic welding head, and then penetrating the at least fibrous carrier layer at least in part by the thermoplast material using the ultrasonic welding head and forming the welding connection between the thermoplast material with the at least one fibrous carrier layer using the ultrasonic welding head.

The invention, furthermore, relates to a method for producing the cover arrangement according to the invention by using said method for connecting at least one mounting part with a cover, according to the invention.

Further embodiments of the cover arrangement and the method according to the invention may be derived from the description of the embodiments shown in the figures and from the figures.

Figure 1 shows a perspective view of an example of a cover arrangement according to the invention, with the bottom side of an engine top cover facing upwards, which is the opposite direction of the normal mounting position, where the bottom side faces downwards.

Figure 2a to c show schematic cross section view of examples of cover arrangement according to figure 1.

Figure 3a shows, in a schematic side view, an embodiment of the device according to the invention comprising an ultrasonic welding head suitable for the realization of the welding connection between the base portion of the mounting part and the fibers of the fibrous layer of a cover arrangement according to the invention.

Fig. 3b shows, in a side view, another embodiment of the device according to the invention comprising an ultrasonic welding head suitable for the realization of the welding connection between the base portion of the mounting part and the fibers of the fibrous layer of a cover arrangement according to the invention.

Fig. 4a schematically shows the steps of the method for connecting a mounting part to a cover according to an embodiment of the invention.

Fig. 4b schematically shows the steps of the method for connecting a mounting part to a cover according to another embodiment of the invention.

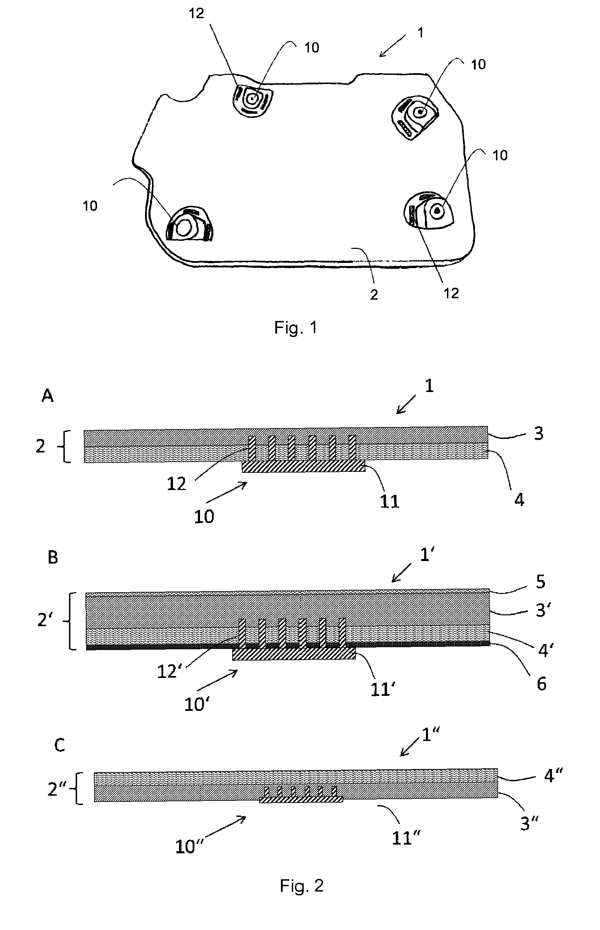

Figure 1 shows the cover arrangement 1, with the bottom side of an engine top cover (engine top cover) facing upwards, being the opposite direction of the normal mounting position, where the bottom side faces downwards, with the body 2 formed with at least one fibrous carrier layer. The arrangement 1 is configured for reducing the noise emitted by a motor vehicle part, here in particular of the engine of a motor vehicle. The engine cover shows four thermoplast base portions 10 of a mounting part, which are connected to the fibrous carrier layer of the engine top cover 2 by a welding connection 12. The thermoplast may be polyamide 6.

Furthermore the base portion 10 is of the example shown is built to receive a rod shaped protrusion to form the mount between the cover and the engine. The rod shaped protrusion might be permanently fixed to the engine block. This type of fixations are known in the art, however not the welding connection of the base plate to the fibrous carrier layer.

Fig. 2a shows that the cover 2, which is an engine top cover, of the cover arrangement 1 consists of a fibrous carrier layer 3 and an optional open-cell PU light foam layer 4, being superposed over the full area of the cover, in the embodiment shown. The base portion 10 is made of a thermoplast and has a plate portion 11 and has hollow-pin-shaped parts 12, here a number of six protrusions being shown, which are integral with the plate portion 11. The pins are produced by an ultrasonic welding head having corresponding cylindrical pins, for example.

Fig. 2b shows that the cover 2', which is an engine top cover, of the cover arrangement 1' consists of a fibrous carrier layer 3', an optional open-celled PU light foam layer 4', an optional scrim layer 6 on the B-side of the cover 2' and a side decoration layer 5 on the A-side of the cover 2', in the embodiment shown. Similar to Fig. 2a, the base portion 10' is made of a thermoplast and has a plate portion 11' and has hollow-pin-shaped parts 12', here also a number of six protrusions being shown, which are integral with the plate portion 11'. The fibrous carrier layer 3' may have a different thickness compared to the fibrous carrier layer 3 of Fig. 2a and the light foam layer 4' may have a different thickness compared to the light foam layer 4 of Fig. 2a. All layers might have variable thickness ranges; in particularly they might be thicker outside the area of the welding. The length of the pins 12' is adapted, compared to Fig. 2a, to also at least partly penetrate into the fibrous carrier layer 3', for allowing establishing the welding connection between the thermoplast of the pins 12' and the fibers of the fibrous carrier layer 3'.

The A-side of an engine top cover is the side of the cover, which typically faces upwards, the B-side, is the opposite side, i.e. the bottom side. The terms up and low can be understood when considering that the mounting part is intended to be fixed at the bottom side of the cover in a mounting position, which means that the bottom side of the cover is facing the engine bay or the ground, respectively, i.e. the normal vector of the bottom side is substantially parallel to the positive direction of gravity.

The decoration layer 5 may comprise a textile fabric, for instance a nonwoven scrim layer, woven or knitted fabric and or a polymeric film, for instance a thermoplastic polyurethane film. The textile fabric is preferably made of a thermoplastic material that will not melt under 220°C, for instance polyester, preferably polyethylene terephthalate (PET) or polybutylene terephthalate (PBT).

Fig. 2c shows a basic embodiment of a cover arrangement 1", having a cover 2" including superposed the fibrous carrier layer 3" and the optional light foam layer 4". The mounting part 10" was welded by ultrasonic welding of a base plate 11" to the outer surface of the fibrous layer, thereby achieving an acoustically self-dampening configuration. Also here the welding caused a material connection between the surface of the fibrous carrier layer and the base plate, as well as a penetration in part of the base plate material in the carrier layer here shown in the form of protrusions. If no optional layer are available between the base plate and the carrier layer at the area to be welded, of if only a thin nonwoven scrim layer is available the penetration of the base plate material in the fibrous carrier layer can be minimal to still obtain a good durable connection between the fibrous carrier layer and the base plate, as long as the in between scrim layer can be punctured by the welding head, to obtain a direct connection between the material of the base plate and the material of the fibrous carrier layer. Optionally the scrim layer can be dismissed in the area of the welding connection to ensure a direct welding to the fibrous carrier layer. Penetration in part in the fibrous layer is however preferred as the connection is more strong and durable.

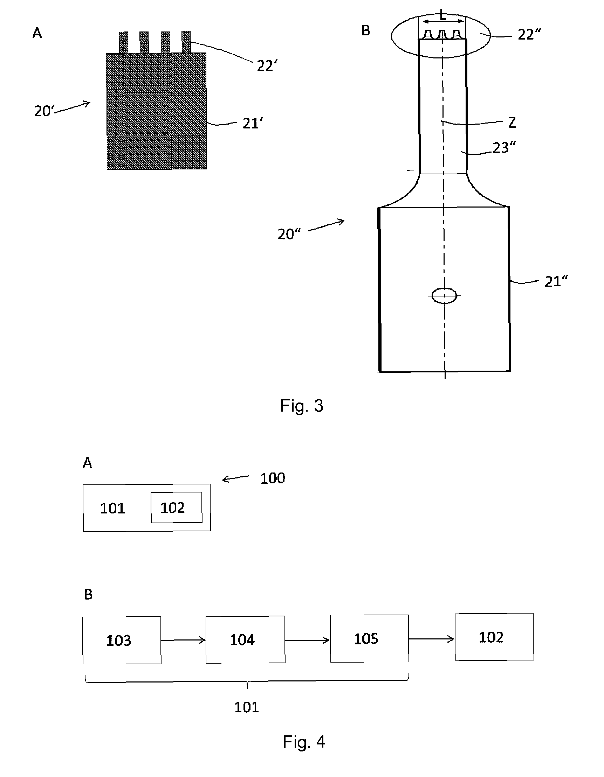

In Fig. 3a, the welding head 20' is shown, having four cylindrical pins 22' extending from a welding head base 21'. The pins serve to transfer the ultrasonic energy from the welding head to the target, which, primarily, is the -initially fully plain shaped- base portion 11. The mounting part is mounted to the cover by a welding connection of the base portion 10 and at least one fibrous carrier layer 3, wherein the welding connection is realized by an ultrasonic welding machine having an ultrasonic welding head, in the embodiments shown here.

Fig. 3b shows the device being a welding head 20" with base part 21" and protrusions 22", the letter being arranged distal to the base part on top of the end of a longitudinal section 23" of the base part, which extends along the long axis Z of the welding head from the base part 21". The protrusion 22", as can be seen in Fig. 4c, has one first section 22a", which is arranged proximal to the base part, and integrally formed with the base part 21", and a second section 22b", which is arranged distal to the base part 21" and is the section which makes first contact with the target for receiving the ultrasonic energy, e.g. the base portion of the mounting part. The second section 22b" is cone-shaped, which results in an optimal energy transfer and also allows an efficient penetration of layers of the layer setup. The first section 22a", which preferably forms the transition section of the protrusion to the base part, also has a substantially cone-shape, which preferably has a concavely shaped wall, which means in case of a symmetrical cone that the cone side wall is dented towards the cone symmetry axis. Said shape allows for easily pulling out the welding head's protrusions from the layer setup after they had penetrated a layer setup and established the welding connection.

Fig. 4a schematically shows the steps of the method for connecting a mounting part to a cover according to an embodiment of the invention. The method 100 is a method for connecting at least one mounting part with a cover, the mounting part being configured for mounting the cover to a vehicle, in particular the cover being an engine top cover for covering the engine of the vehicle from above (e.g. the engine top cover 2 or 2'), the cover having superposed layers, including, at least, a foam layer (e.g. the light foam layer 4 or 4') and a fibrous carrier layer(e.g. the fibrous carrier layer 3 or 3'), the at least one mounting part having at least one base portion (e.g. the base portion 10 or 10') made from a thermoplast, comprising the steps:
- (101) mounting the at least one mounting part to the cover by - (102) generating at least one welding connection of the at least one base portion and at least one fibrous carrier layer.

As shown in Fig. 4b, the method step 101 of mounting the at least one mounting part to the cover preferably comprises the steps of
- (104) penetrating the light foam layer by at least a part of at least one base portion;
- (105) at least partly penetrating the fibrous carrier layer by said part of the base portion.

the method step 101 of mounting the at least one mounting part to the cover preferably comprises the steps of
- (103) pressing the ultrasonic welding head of an ultrasonic welding machine against a base portion of a mounting part, thereby melting and displacing some thermoplast material of the base portion towards the at least one fibrous carrier layer,
- (104) then penetrating the light foam layer by the thermoplast material using the ultrasonic welding head, and
- (105) then penetrating the at least fibrous carrier layer at least in part by the thermoplast material using the ultrasonic welding head.

In the last step, the welding connection between the thermoplast material with the at least one fibrous carrier layer is formed using the ultrasonic welding head, thereby, preferably, creating an acoustically self-dampened cover arrangement.

## Claims

1. Cover arrangement (1; 1') for reducing the noise emitted by a motor vehicle part, in particular of the engine of a motor vehicle, comprising a cover (2; 2') having at least a fibrous carrier layer (3; 3'), and the cover arrangement comprising at least one mounting part for mounting the cover to the vehicle, the mounting part having at least one base portion (10; 10') made from a thermoplast, **characterized in that** the at least one mounting part is mounted to the cover by at least one welding connection of the at least one base portion (10; 10') and at least one fibrous carrier layer (3; 3').

2. Cover arrangement according to claim 1, wherein at least a part (12a, 12b) of the base portion (10; 10') contact the outer surface of the fibrous carrier layer and or penetrates the fibrous carrier layer (3; 3') at least a part, and, in particular, the welding connection is localized within said fibrous carrier layer (3; 3') at least in part.

3. Cover arrangement according one of the previous claims, wherein at least a part (12a, 12b) of the base portion (10; 10') contact the outer surface of the fibrous carrier layer and or penetrates the fibrous carrier layer (3; 3') at least in part and extending into the at least one fibrous carrier layer (3; 3'), wherein the thermoplast material (12a, 12b; 12a', 12b') of the base portion is substantially hollow-cylindrical shaped and having a diameter of substantially 1.0 mm to 5.0 mm.

4. Cover arrangement according to one of the previous claims, wherein the cover further comprises at least one additional layer in the form of a light foam and or a film layer and or a nonwoven covering layer, superposed and laminated to the fibrous carrier layer on the surface at least in the area where the welding connection is localised, and wherein at least part (12a, 12b) of the base portion (10; 10') penetrates the additional layer or layers, contacts the outer surface of the fibrous carrier layer and or penetrates the fibrous carrier layer (3; 3') at least in part, and, in particular, the welding connection is localized within said fibrous carrier layer (3; 3') at least in part.

5. Cover arrangement according to one of the previous claims, wherein the at least one welding connection is realized by ultrasonic welding.

6. Cover arrangement according to claim 4, wherein the at least one base portion (10; 10') is mounted to the cover (2; 2') by multiple welding connections, wherein, in particular, the ultrasonic welding head (20; 20') is configured to create multiple welding connections in parallel, in particular the ultrasonic welding head (20'; 20") having multiple pins (22'; 22") for transferring the ultrasonic energy to the base portion (10; 10') and the cover (2; 2').

7. Cover arrangement according to one of the previous claims, wherein the thermoplast of the base portion is chosen from the group of materials comprising polyamide, in particular polyamide 6.6, polyamide 6, polyesters, in particularly polyethylene terephthalate or polybutylene terephthalate and wherein the thermoplast may or may not contain filler, e.g. a glass fiber or mineral fiber.

8. Cover arrangement according to one of the previous claims wherein the at least one fibrous carrier layer (3; 3') is a consolidated fibrous material consisting of fibres and a binder in the form of a thermoplastic binder or a thermoset binder whereby the binder forms small binding points between the fibers to consolidate the fibrous material.

9. Cover arrangement according to claim 8 whereby the fibres are at least one of thermoplastic fibers, preferably polyester fibers, preferably polyethylene-terephthalate (PET) or polybutylene terephthalate (PBT), natural fibers, preferably cotton or flax fibers, or mineral fibers, preferably glass fibers, carbon, ceramic or basalt fibers or a mixture of such fibers.

10. Cover arrangement according to one of the previous claims, wherein the cover arrangement is configured to be an engine top cover arrangement (1; 1') for being mounted atop the engine of a motor vehicle.

11. Cover arrangement according to one of the previous claims, wherein the cover (2; 2') is configured to be supported by the at least one mounting part, which is mounted at the vehicle, wherein the at least welding connection of the at least one base portion (10; 10') and the at least one fibrous carrier layer (3; 3') provides an acoustical decoupling of the cover (2; 2') and the vehicle.

12. Cover arrangement according to one of the previous claims, wherein the area of the cover (2; 2'), which is located above the location of the welding connection, is substantially unaffected by the process step of welding the base portion (10; 10') to the fibrous carrier layer (3; 3'), in particular remaining substantially plain and visually unimpaired.

13. Cover arrangement according to one of claim 4 to 12, wherein the thickness of the at least one light foam layer is between 0.5 mm and 5.0 mm, the thickness of the fibrous carrier layer is between 0.5 mm and 5.0 mm, the thermoplast material (12a, 12b; 12a', 12b') of the base portion (10; 10') is penetrating the at least one light foam layer (4; 4') and extending into the at least one fibrous carrier layer (3; 3'), wherein the thermoplast material (12a, 12b; 12a', 12b') of the base portion is substantially hollow-cylindrical shaped and having a diameter of substantially 1.0 mm to 5.0 mm.

14. Method (100) for connecting at least one mounting part with a cover, the mounting part being configured for mounting the cover to a vehicle, in particular the cover being an engine top cover for covering the engine of the vehicle from above, the cover having superposed layers, including at least a fibrous carrier layer and eventually additional layer or layers, like a light foam layer and or a film layer and or a nonwoven covering layer, the at least one mounting part having at least one base portion made from a thermoplast, comprising the steps:
- (101) mounting the at least one mounting part to the cover by (102) generating at least one welding connection of the at least one base portion and at the fibrous carrier layer.

15. Method according to claim 13, wherein the step of mounting the at least one mounting part to the cover comprises the steps of
- (104) penetrating the eventually additional layer or layers by at least a part of at least one base portion;
- (105) at least partly penetrating the fibrous carrier layer by said part of the base portion
- (102) realizing the welding connection at least partly within said at least one fibrous carrier layer.

16. Method according to claim 13 or 14, wherein the step of mounting the at least one mounting part to the cover comprises the steps of
(103) pressing the ultrasonic welding head of an ultrasonic welding machine against a base portion of a mounting part, thereby melting and displacing some thermoplast material of the base portion towards the at least one fibrous carrier layer,
preferably: then (104) penetrating the light foam layer and or film layer and or nonwoven layer by the thermoplast material using the ultrasonic welding head, and then (105) penetrating the at least fibrous carrier layer at least in part by the thermoplast material using the ultrasonic welding head and (102) forming the welding connection between the thermoplast material with the at least one fibrous carrier layer using the ultrasonic welding head.

17. Device for producing the cover arrangement of claim 1 to 12 and which is configured to apply the method of one of claims 14 to 16, wherein the device comprises a welding head, which is configured to establish the welding connection of the at least one base portion (10: 10') and the at least one fibrous layer (3;3'), wherein the welding head has at least one substantially cylindrical protrusion, which is configured to be pressed against the at least one base portion and the at least one fibrous layer to establish the welding connection.

18. Device according to claim 17 wherein the at least one protrusion is conically formed with a wider base than tip.
